Europäisches Patentamt

European Patent Office

Office européen des brevets

(11) Numéro de publication : **0 307 316 B1**

# (12) FASCICULE DE BREVET EUROPEEN

(45) Date de publication du fascicule du brevet :
**04.03.92 Bulletin 92/10**

(51) Int. Cl.⁵ : **B60J 1/10**

(21) Numéro de dépôt : **88402265.8**

(22) Date de dépôt : **08.09.88**

(54) **Vitrage automobile destiné au collage direct.**

(30) Priorité : **10.09.87 DE 3730344**

(43) Date de publication de la demande :
**15.03.89 Bulletin 89/11**

(45) Mention de la délivrance du brevet :
**04.03.92 Bulletin 92/10**

(84) Etats contractants désignés :
**AT BE CH DE ES FR GB GR IT LI LU NL SE**

(56) Documents cités :
**EP-A- 0 121 480**
**EP-A- 0 157 281**
**FR-A- 2 358 366**

(73) Titulaire : **SAINT GOBAIN VITRAGE
INTERNATIONAL**
**"Les Miroirs" 18, avenue d'Alsace**
**F-92400 Courbevoie (FR)**
(84) **BE CH ES FR GB GR IT LI LU NL SE AT**

Titulaire : **VEGLA Vereinigte Glaswerke GmbH
Viktoriaallee 3-5
W-5100 Aachen (DE)**
(84) **DE**

(72) Inventeur : **Kunert, Heinz
23 Am Krielerdom
W-5000 Köln 41 (DE)**

(74) Mandataire : **de Toytot, Robert et al
SAINT-GOBAIN RECHERCHE 39 quai Lucien
Lefranc
F-93300 Aubervilliers (FR)**

EP 0 307 316 B1

## Description

L'invention concerne un vitrage automobile destiné au collage direct sur la tôle de fixation de la baie d'une carrosserie automobile équipé d'au moins un profilé limiteur déposé sur le vitrage par collage parallèlement au chant de celui-ci et destiné à limiter un boudin de colle.

Le profilé limiteur a à peu près la même hauteur que celle du boudin de colle posé au moment du montage du vitrage dans la baie, sa fonction consiste à maintenir en place le boudin de colle au moment de la mise en place du vitrage et à constituer une limite nette à celui-ci.

Dans une technique de montage connue on place un profilé limiteur par exemple en caoutchouc entre le vitrage et la tôle de maintien sur le côté de la baie (DE-A-31 18 124, EP-A-0 157 281). Lorsqu'un tel profilé est mis en place immédiatement avant la pose du vitrage dans la baie, juste avant que le boudin de colle ait été lui-même placé à l'endroit voulu, on prolonge inutilement la durée de la pose. Si la mise en place du profilé limiteur est effectuée dans un premier temps, son collage proprement dit entraîne des difficultés car le profilé doit être maintenu immobile jusqu'à la prise complète de la colle sur le verre.

On connaît d'autre part un vitrage automobile équipé d'un profilé en caoutchouc ou en plastique fixé à la périphérie du vitrage et qui possède deux ailes latérales parallèles, liées l'une à l'autre par des traverses (DE-A-35 36 806). Ce profilé est lui aussi préformé et collé sur la surface du verre mais son montage et son collage sur le vitrage sont encore plus délicats, en particulier dans les coins.

Font également partie de l'état de la technique les procédés selon lesquels le vitrage est relié à la tôle de fixation de la baie à l'aide de deux cordons compatibles entre eux et déposés en deux phases de production successives. Lors de la première phase, on dépose à la périphérie du pare-brise un cordon profilé qu'on laisse durcir. Il servira, au cours de la deuxième phase, au moment où un deuxième cordon sera déposé, d'intercalaire entre le verre et le deuxième cordon (EP-A-121 481 B). On peut éventuellement équiper cet intercalaire rigide d'ailes qui limitent l'expansion du deuxième cordon.

L'invention se donne pour mission de continuer à développer un vitrage automobile du type de ceux décrits plus haut à l'aide duquel la fabrication du vitrage équipé de ces profilés limiteurs soit simplifiée, dans lequel la liaison entre le profilé limiteur et la surface du verre soit garantie pour longtemps et enfin dans lequel le profilé limiteur est posé même dans les coins du vitrage à faible rayon sans faire de pli et sans être sous contrainte ce qui autorise un montage parfait du vitrage ainsi équipé.

Le vitrage automobile selon l'invention est destiné au collage direct sur la tôle de fixation de la baie d'une carrosserie automobile équipé d'un profilé limiteur constitué d'une masse adhésive durcissable déposée soit directement sur le vitrage, soit sur une couche opaque placée sur celui-ci, le dépôt s'effectuant par extrusion de la masse adhésive visqueuse, à l'aide d'une buse calibrée, et parallèlement au chant du vitrage, ce profilé étant destiné à limiter la progression d'un boudin de colle vers l'intérieur du vitrage (Vitrage du type divulgué par EP-A-0 121 481), il se caractérise en ce qu'un deuxième profilé a été déposé parallèlement au premier entre celui-ci et le chant du vitrage, le dépôt de ce deuxième profilé ayant été effectué par extrusion dans les mêmes conditions que le premier profilé limiteur.

Etant donné que le profilé limiteur qui équipe le vitrage selon l'invention n'est pas constitué d'un profilé préformé qu'on place sur le vitrage mais qu'au contraire il est constitué et formé directement sur lui on peut lui donner exactement les formes souhaitées même lorsque les rayons de courbure qu'il doit prendre sont très petits, comme dans les coins du vitrage. Le dépôt de la masse adhésive se produit sans aucune contrainte, il ne subsiste donc aucune force dans le cordon qui soit susceptible de provoquer son déplacement pendant la durée qui sépare son dépôt de sa prise en masse. Les masses adhésives que l'on choisira de préférence doivent avoir une élasticité comparable à celle du caoutchouc après leur prise en masse. C'est le cas des polyuréthanes unicomposants ou bicomposants.

Conformément à un mode de réalisation avantageux de l'invention, on utilise comme masse adhésive pour le profilé limiteur des matériaux qui sont compatibles avec ceux qui serviront à constituer le boudin de colle au moment de la pose du vitrage. On obtient ainsi une liaison immédiate entre le boudin de colle et le profilé limiteur ce qui entraîne un collage globalement amélioré.

Selon une autre forme de réalisation de l'invention le choix des matériaux ou le traitement des surfaces est tel que le collage entre le boudin de colle d'une part et d'autre part le vitrage et les profilés limiteurs soit réduit ou même empêché. Dans ce cas, on prévoit des rainures ou des logements à la limite entre les profilés limiteurs et le boudin de colle de telle sorte que ce soit principalement ou même uniquement par un accrochage mécanique que la liaison entre le boudin de colle et les profilés limiteurs soit assurée.

D'autres caractéristiques avantageuses complémentaires des formes de réalisation de l'invention font l'objet des revendications secondaires et vont être expliquées dans ce qui suit à l'aide des exemples présentés dans les figures.

Parmi les figures, on voit successivement en perspective:
- figure 1 : vitrage automobile avec deux profilés limiteurs
- figure 2 : vitrage automobile avec deux profilés limiteurs dont l'un est équipé d'une rainure destinée à recevoir un fil souple qui permettra de déchirer le joint

– figure 3 : vitrage automobile avec deux profilés limiteurs qui, grâce à la forme de leur section, permettent un assemblage mécanique du boudin de colle avec le profilé limiteur.

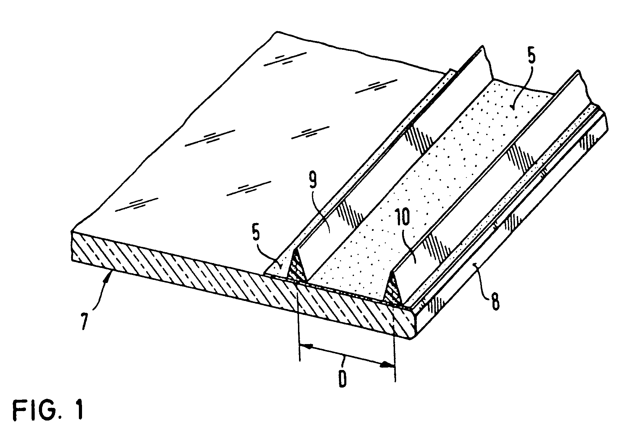

L'exemple présenté figure 1 comporte un vitrage 7, c'est soit un vitrage trempé soit un vitrage feuilleté. Normalement il s'agit de vitrages dont la forme bombée correspond à celle de la carrosserie. Sur la surface qui après montage du vitrage dans la voiture se trouve dirigée vers l'intérieur c'est-à-dire normalement du côté concave, on a prévu, le long du bord du vitrage, une couche 5 qui a la forme d'un cadre. Elle est en général constituée d'une peinture à chaud opaque à la lumière visible et ultraviolette.

A la périphérie 8 du vitrage 7 courent deux profilés 9 et 10, ils sont placés sur la couche 5 en forme de cadre. Ils ont des sections de même forme et de même dimension, ils possèdent une hauteur comprise en général entre 8 et 12 mm. Cette hauteur correspond à peu près à l'épaisseur du boudin de colle qui sert à fixer le vitrage 1 dans la baie de la carrosserie. La section des profilés limiteurs 9 et 10 a avantageusement la forme d'un triangle pointu dont la base est collée sur la surface du verre ou sur la couche 5. Cette base proprement dite à une largeur d'environ 5 à 8 mm.

Comme masse adhésive qui après durcissement possède l'élasticité du caoutchouc, les polyuréthanes sont particulièrement adaptés. Par exemple, les systèmes unicomposants qui durcissent à l'humidité, tels que décrits dans le brevet US-A-3 779 794 ou des systèmes correspondant à deux composants sont recommandés. La masse adhésive possède une viscosité élevée, elle garde ainsi après extrusion la forme profilée qui lui a été donnée. Elle est posée sur la surface du verre à l'aide d'une buse d'extrusion de forme adaptée. Le guidage de la buse d'extrusion peut être effectué par exemple par un robot programmable ou à la main. Dans ce dernier cas on se sert pour guider la buse d'un dispositif de guidage qui suit le chant 8 du vitrage.

Les deux profilés 9 et 10 sont disposés parallèlement l'un à l'autre à une distance D comprise entre environ 15 et 25 mm. Ils se trouvent à une distance définie du chant 8 du vitrage et lui restent parallèles. Entre les profilés limiteurs et la couche 5 opaque à la lumière et aux rayons ultraviolets, on a éventuellement prévu l'interposition d'une couche de primaire d'adhérence. Après durcissement, les deux profilés 9 et 10 constituent les limites d'un canal dans lequel on introduira un boudin de colle lors du montage du vitrage.

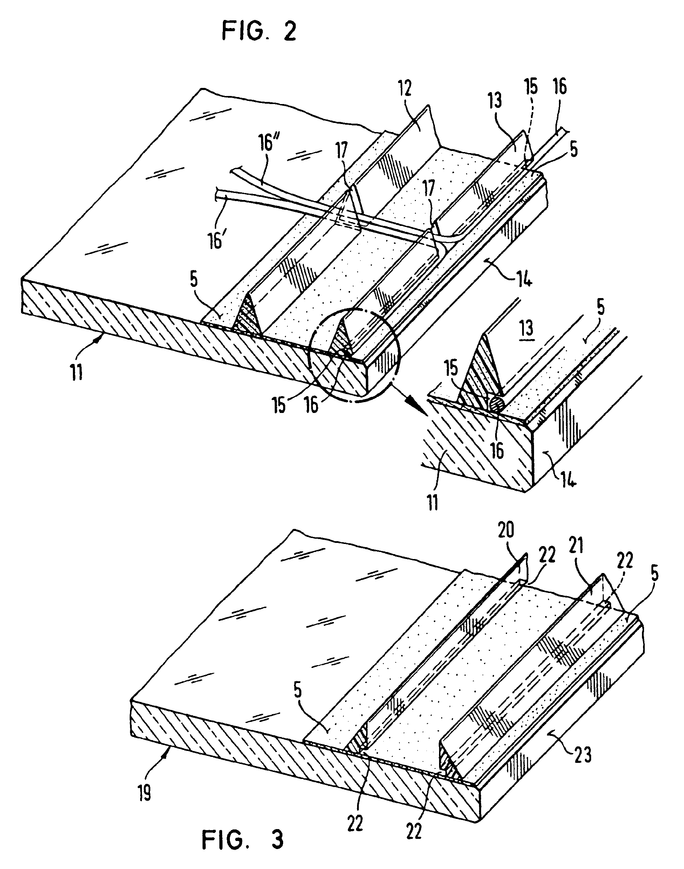

L'exemple présenté figure 2 consiste en un vitrage 11 équipé de nouveau de deux profilés limiteurs 12 et 13 mais cette fois-ci le profilé extérieur 13 exerce une nouvelle fonction : on a prévu le long de la surface de base du profilé 13 du côté du chant du vitrage une rainure 15 qui a les dimensions suivantes : hauteur environ 2 mm, largeur de 2 a 3 mm environ. La rainure 15 est obtenue en donnant a la buse d'extrusion une forme adéquate. Après durcissement des profilés limiteurs, on introduit dans la rainure 15, un fil textile 16. Celui-ci est constitué d'un matériau à forte résistance a la traction, et court le long de toute la périphérie du vitrage. Le début 16' et la fin 16" du fil 16 traversent conjointement les deux profilés 12 et 13 en direction du centre du vitrage. C'est pour cette raison qu'on a prévu d'interrompre les profilés 12 et 13 par une fente 17 qui permettra aux deux fils de les traverser. De cette manière, le vitrage automobile 11 est équipé, avec le fil 16, d'un système qui permettra de simplifier le démontage du vitrage si l'on devait plus tard décoller le vitrage de la carrosserie. En tirant sur les extrémités 16' et 16" on pourra alors déchirer les profilés 12 et 13 ainsi que le boudin de colle qu'ils encadrent.

La figure 3 présente un autre mode de réalisation. Le vitrage 19 est équipé de nouveau d'une couche opaque 5 sur laquelle sont posés deux profilés 20, 21 parallèles l'un a l'autre et situés a une distance constante du chant 23 du vitrage. Le canal limité par les deux profilés sera plus tard, lors du montage du parebrise, rempli d'un boudin de colle. Ici, chacun des deux profilés 20 et 21 est équipé, a sa base, du côté du canal, d'une rainure ou d'un logement 22. Lors du montage du parebrise, le boudin de colle pénétrera dans ces rainures ou ces logements 22 ce qui permettra de lier le boudin de colle au vitrage non seulement par collage mais également par accrochage mécanique. Ce mode de réalisation permet en adoptant un coefficient d'adhésion défini entre le boudin de colle d'une part et la surface du vitrage et les profilés d'autre part, par exemple, en traitant les surfaces du canal constitué par les deux profilés et l'espace intermédiaire, d'obtenir que l'assemblage boudin de colle/vitrage soit assuré essentiellement par un accrochage mécanique dans les logements 22. L'avantage d'un tel montage mécanique réside dans un démontage du vitrage qui est facilité puisqu'il suffit d'exercer une pression mécanique pour extraire le vitrage de la baie.

**Revendications**

1. Vitrage automobile destiné au collage direct sur la tôle de fixation de la baie d'une carrosserie automobile équipé d'un profilé limiteur (9, 12, 20) constitué d'une masse adhésive durcissable déposée soit directement sur le vitrage, soit sur une couche (5) opaque placée sur celui-ci, le dépôt s'effectuant par extrusion de la masse adhésive visqueuse, à l'aide d'une buse calibrée, et parallèlement au chant du vitrage, ce profilé étant destiné à limiter la progression d'un boudin de colle vers l'intérieur du vitrage **caractérisé en ce qu'un** deuxième profilé (10, 13, 21) a été déposé parallèlement au premier entre celui-ci et le chant du vitrage, le dépôt du deuxième profilé (10, 13, 21) ayant été effectué par un extrusion dans les mêmes conditions que le premier profilé limiteur (9, 12, 20).

2. Vitrage automobile selon la revendication 1 **caractérisé en ce que** les deux profilés (9, 12, 20 ; 10, 13, 21) ont des sections sensiblement triangulaires.

3. Vitrage automobile selon la revendication 1 ou la revendication 2 **caractérisé en ce que** les deux profilés parallèles l'un à l'autre (9, 10 ; 12, 13 ; 20 et 21) constituent entre eux un canal qui limite le boudin de col le sur ses deux côtés.

4. Vitrage selon l'une des revendications 1 à 3 **caractérisé en ce que** les profilés limiteurs (9, 10 ; 12, 13 ; 20, 21) sont constitués d'une masse adhésive compatible avec le matériau du boudin de collage auquel elle adhérera.

5. Vitrage automobile selon l'une des revendications 1 à 4, **caractérisé en ce que** deux profilés limiteurs (20,21) constituant un canal destiné à recevoir un boudin de colle comportent chacun sur leur face interne une rainure (22) ou un logement destinés à assurer entre le boudin de colle et les profilés (20,21) un accrochage mécanique.

6. Vitrage automobile selon la revendication 5, **caractérisé en ce que** la surface des profilés (20,21) qui limitent le canal destiné à recevoir le boudin de colle et la surface du vitrage ou celle de la couche opaque (5) ont une adhérence diminuée par rapport au boudin de colle destiné à assurer la liaison entre le vitrage et la baie, de telle sorte que cette liaison soit assumée de manière prépondérante par un accrochage mécanique entre le boudin de colle et les profilés limiteurs (20,21).

7. Vitrage automobile selon l'une des revendications 1 à 4, **caractérisé en ce qu'un** profilé limiteur (13) possède sur la face opposée au boudin de colle et dirigée, vers l'extérieur, une rainure (15) destinée à recevoir un fil (16) constitué d'un matériau résistant à la traction.

**Patentansprüche**

1. Autoglasscheibe für die Direktverklebung mit dem Befestigungsflansch des Fensterrahmens einer Autokarosserie, mit einem Begrenzungsprofil (9,12,20) aus einer härtenden Klebermasse, die entweder unmittelbar auf der Glasscheibe oder auf einer auf der Glasscheibe angeordneten lichtundurchlässigen Schicht (5) durch Extrusion der viskosen Klebermasse mit Hilfe einer kalibrierten Düse parallel zur Glasscheibenkante abgelegt wird, wobei dieses profil zur Begrenzung der Verbreiterung des Kleberstrangs in Richtung auf die Scheibenfläche dient, **dadurch gekennzeichnet**, daß parallel zum ersten profil zwischen diesem und der Scheibenkante ein zweites profil (10,13,21) abgelegt worden ist, wobei die Ablage des zweiten profils (10,13,21) durch Extrusion unter denselben Bedingungen wie bei dem ersten Begrenzungsprofil (9,12,20) durchgeführt worden ist.

2. Autoglasscheibe nach Anspruch 1, dadurch gekennzeichnet, daß die beiden profile (9,12,20; 10,13,21) im wesentlichen dreieckige Querschnitte aufweisen.

3. Autoglasscheibe nach Anspruch 1 oder 2, dadurch gekennzeichnet, daß die beiden parallel zueinander angeordneten profile (9,10; 12,13; 20,21) zwischen sich einen Kanal bilden, der den Kleberstrang auf beiden Seiten begrenzt.

4. Autoglasscheibe nach einem der Ansprüche 1 bis 3, dadurch gekennzeichnet, daß die Begrenzungsprofile (9,10; 12,13; 20,21) aus einer Klebermasse bestehen, die mit dem Material des Kleberstrangs kompatibel ist und an diesem anhaftet.

5. Autoglasscheibe nach einem der Ansprüche 1 bis 4, dadurch gekennzeichnet, daß zwei einen Kanal für die Aufnahme der Kleberstrangs bildende Begrenzungsprofile (20,21) jeweils auf ihrer Innenseite eine Nut (22) oder Hinterschneidung aufweisen, die eine mechanische Verankerung zwischen dem Kleberstrang und den Begrenzungsprofilen (20,21) sicherstellen.

6. Autoglasscheibe nach Anspruch 5, dadurch gekennzeichnet, daß die den Kanal für die Aufnahme des Kleberstrangs begrenzenden Oberflächen der profile (20,21) und die Oberfläche der Glasscheibe oder der lichtundurchlässigen Schicht (5) eine verminderte Haftung zu dem die Verbindung der Glasscheibe mit dem Fensterrahmen herstellenden Kleberstrangs aufweisen, so daß die Verbindung im wesentlichen durch die mechanische Verankerung von Kleberstrang und Begrenzungsprofilen (20,21) erzeugt wird.

7. Autoglasscheibe nach einem der Ansprüche 1 bis 4, dadurch gekennzeichnet, daß ein Begrenzungsprofil (13) auf seiner dem Kleberstrang abgewandten Außenseite mit einer Nut (15) für die Einlage einer Trennschnur (16) aus reißfestem Material versehen ist.

**Claims**

1. Car glazing for direct bonding to the fixing sheet of the window of a car body equipped with a limiting profile (9, 12, 20) constituted by a hardenable adhesive mass deposited either directly on the glazing, or on an opaque layer (5) placed on the latter, deposition taking place by extrusion of the viscous adhesive mass with the aid of a calibrated nozzle and parallel to the edge of the glazing, said profile being intended to limit the advance of an adhesive bead towards the interior of the glazing, characterized in that a second profile (10, 13, 21) has been deposited parallel to the first between the latter and the edge of the glazing, the deposition of the second profile (10, 13, 21) having taken place by extrusion under the same conditions as the first limiting profile (9, 12, 20).

2. Car glazing according to claim 1, characterized in that the two profiles (9, 12, 20; 10, 13, 21) have substantially triangular cross-sections.

3. Car glazing according to claims 1 or 2, characterized in that the two parallel profiles (9, 10; 12, 13; 20, 21) form between them a channel limiting the adhesive bead on its two sides.

4. glazing according to one of the claims 1 to 3, characterized in that the limiting profiles (9, 10; 12, 13; 20, 21) are constituted by an adhesive mass compatible with the material of the adhesive bead to which it will adhere.

5. Car glazing according to one of the claims 1 to 4, characterized in that two limiting profiles (20, 21) constituting a channel for receiving an adhesive bead have in each case on their inner face a groove or recess (22) for ensuring a mechanical attachment between the adhesive bead and the profiles (20, 21).

6. Car glazing according to claim 5, characterized in that the surface of the profiles (20, 21) limiting the channel for receiving the adhesive bead and the surface of the glazing or that of the opaque layer (5) have a reduced adhesion with the adhesive bead ensuring the connection between the glazing and the opening, in such a way that said connection is assumed to be preponderant by a mechanical attachment between the adhesive bead and the limiting profiles (20, 21).

7. Car window according to one of the claims 1 to 4, chacterized in that the limiting profile (13) has on the face opposite to the adhesive bead and directed towards the outside a groove (15) for receiving a wire (16) made from a tension-resisting material.

FIG. 1

## FIG. 2

## FIG. 3